# FASCICULE DE BREVET EUROPEEN

(11) **EP 4 364 489 B1**
(45) Date de publication et mention de la délivrance du brevet: **30.07.2025**
(21) Numéro de dépôt: 22747365.9
(22) Date de dépôt: 29.06.2022
(51) Int. Cl.: H04W 72/00

(54) **PROCEDE DE COMMUNICATION ENTRE UNE STATION DE BASE ET AU MOINS UN EQUIPEMENT DE COMMUNICATION, STATION DE BASE, EQUIPEMENT DE COMMUNICATION ET PROGRAMME D'ORDINATEUR CORRESPONDANTS**
VERFAHREN ZUR KOMMUNIKATION ZWISCHEN EINER BASISSTATION UND MINDESTENS EINEM KOMMUNIKATIONSGERÄT, BASISSTATION, KOMMUNIKATIONSGERÄT UND ENTSPRECHENDES COMPUTERPROGRAMM
METHOD FOR COMMUNICATION BETWEEN A BASE STATION AND AT LEAST ONE ITEM OF COMMUNICATION EQUIPMENT; BASE STATION, COMMUNICATION EQUIPMENT AND COMPUTER PROGRAM CORRESPONDING THERETO

(30) Priorité: 01.07.2021 FR 2107154
(43) Date de publication de la demande: 08.05.2024
(73) Titulaire: Orange, 92130 Issy-les-Moulineaux (FR)
(72) Inventeur: FRECHIN, Régis, 92326 CHÂTILLON CEDEX (FR); DUBOIS, Pierre, 92326 CHÂTILLON CEDEX (FR)
(74) Mandataire: Vidon Brevets & Stratégie
(86) Numéro de dépôt international: PCT/FR2022/051296
(87) Numéro de publication internationale: WO 2023/275492

(56) Documents cités:
- WO-A1-2020/125525
- US-A1- 2010 278 133
- US-A1- 2011 205 993
- US-A1- 2013 163 540
- US-A1- 2013 250 886

## Description

### 1. Domaine de l'invention

Le domaine de l'invention est celui des télécommunications.

Plus précisément, l'invention concerne les communications en voie montante, c'est-à-dire des équipements de communication vers une station de base, et les communications en voie descendante, c'est-à-dire de la station de base vers les équipements de communication.

On entend ici par équipement de communication un équipement terminal du réseau (également appelé UE pour « User Equipement »), ou un équipement intermédiaire du réseau, comme un CPE (« Customer Premises Equipement »). Un tel équipement de communication peut donc être mobile ou fixe.

La solution proposée s'applique notamment, mais non exclusivement, dans le contexte des réseaux mobiles LTE/4G (« Long Term Evolution ») ou 5G NR (« New Radio » ou « Nouvelle Radio »).

### 2. Art antérieur

Classiquement, on distingue trois configurations principales de qualité de service ou QoS (« Quality of Service ») selon l'accès aux ressources spectrales radios entre les équipements de communication :
- configuration associée à une allocation des ressources radios classique, dite BE ou « best effort » (meilleur effort en français). L'allocation classique correspond à une configuration de QoS radio présentant un niveau de qualité radio qui peut être faible si la charge de la cellule est élevée. Selon cette configuration, rien n'est mis en place spécifiquement pour un équipement donné. La station de base applique un algorithme d'ordonnancement qui distribue les ressources aux différents équipements dans la cellule qu'elle dessert, suivant des règles d'équité. De tels algorithmes sont par exemple de type « Round Robin » ou « Proportional fair » ;
- configuration associée à une allocation des ressources radios avec priorisation relative. L'allocation avec priorisation relative correspond à la configuration de QoS radio présentant un niveau de qualité radio intermédiaire si la charge de la cellule est élevée. Selon cette configuration, la station de base autorise plus de ressources à des flux d'un équipement avec priorisation relative (avec « QoS privilégiée ») qu'à ceux dit « best effort » ;
- configuration associée à une allocation des ressources radios avec priorisation stricte à débit garanti dit « GBR » (« Guaranteed bit rate »). L'allocation avec priorisation stricte GBR correspond à une configuration de QoS radio présentant un niveau de qualité radio élevée même si la charge de la cellule est élevée. La station de base assure un débit minimum en sens montant et/ou descendant à un ou plusieurs flux de l'équipement. La priorisation entre les flux BE et les flux GBR est donc stricte. On note que si les ressources totales de la cellule le permettent, les débits observés des équipements à débits garantis peuvent être supérieurs à ces débits minimums.

Ces trois configurations, présentant des niveaux de QoS différents, peuvent coexister en même temps sur des flux différents d'un même équipement.

On appelle ci-après flux BE (respectivement flux « avec QoS privilégiée », respectivement flux « GBR »), un flux émis ou reçu par un équipement de communication avec une configuration de qualité de service radio associée à une allocation « BE » (respectivement avec priorisation relative, respectivement avec priorisation stricte à débit garanti).

Classiquement, le réseau mobile (notamment la station de base) est configuré pour fournir en priorité un débit cible garanti aux flux des équipements bénéficiant d'une configuration GBR. Les ressources radio restantes sont ensuite affectées, sauf configuration particulière type limitation de débit, à l'ensemble des équipements, en incluant les équipements avec au moins un flux « GBR ».

Les débits GBR correspondent aux débits nécessaires, utiles, pour assurer le service correspondant. Il peut s'agir par exemple de la bande passante requise pour faire passer des flux de vidéo HD, 3D, etc. Il existe toutefois quelques inconvénients à la mise en place d'une configuration associée à une allocation avec priorisation stricte à débit garanti pour certains équipements, notamment les terminaux mobiles.

En effet, lorsqu'un terminal recevant ou émettant au moins un flux GBR est éloigné de la station de base, par exemple localisé en bord de cellule, ou que le canal de transmission entre la station de base et le terminal présente beaucoup d'interférences, la quantité de ressources allouées à ce terminal pour lui offrir un débit garanti est très élevée, et se fait au détriment des autres terminaux de la cellule recevant ou émettant au moins un flux « non-GBR » (par exemple les terminaux recevant ou émettant au moins un flux BE ou avec priorisation relative). En d'autres termes, un terminal recevant ou émettant au moins un flux GBR peut faire diminuer drastiquement la capacité de la cellule et ainsi détériorer les performances des autres terminaux.

Par ailleurs, l'agrégation de terminaux recevant ou émettant au moins un flux GBR dans une même cellule peut créer une pénurie de ressources pour les terminaux recevant ou émettant au moins un flux « non-GBR ». En condition extrême de surcharge cellulaire, les ressources peuvent même devenir insuffisantes pour honorer la somme des débits GBR des terminaux dans la cellule.

On peut ainsi définir quatre états types d'une cellule radio desservie par une station de base :
- cellule « hors congestion » : il y a plus de ressources radio que nécessaire pour écouler le trafic des équipements de communication dans la cellule. Les débits attendus sur les flux GBR sont atteints, voire dépassés, le trafic des flux BE est écoulé sans rencontrer de limitation radio ;
- congestion globale maitrisée dans la cellule : les équipements de communication génèrent du trafic mobilisant l'ensemble des ressources radio de la cellule. Le volume de ressources radio requis pour servir les flux GBR est inférieur à la capacité de la cellule, et correspond à la planification de l'opérateur. Les mécanismes de QoS vont permettre de servir les flux « GBR ». Les flux BE se partagent les ressources radio restantes, comme défini par l'opérateur ;
- congestion globale non maitrisée dans la cellule : les équipements de communication génèrent du trafic mobilisant l'ensemble des ressources radio de la cellule. Le volume de ressources radio requis pour servir les flux GBR est inférieur à la capacité de la cellule, mais supérieur à la planification de l'opérateur. Les mécanismes de QoS vont permettre de servir les flux « GBR ». Les flux BE se partagent le volume de ressources radio restantes non maitrisé, qui peut diminuer drastiquement et impacter négativement la qualité d'expérience des utilisateurs des équipements émettant ou recevant ces flux BE ;
- congestion GBR non maitrisée dans la cellule : l'ensemble des équipements de communication génèrent du trafic mobilisant l'ensemble des ressources radio de la cellule. Dans ce cas, le volume théorique de ressources radio requis pour servir les flux GBR est supérieur à la capacité de la cellule, il y a pénurie. Les mécanismes de QoS ne vont plus permettre de servir l'ensemble des flux GBR tel que souhaité. Le réseau peut alors déclencher des mécanismes de protection. Toutefois, malgré la mise en place de mécanisme de protection, la qualité d'expérience des utilisateurs d'équipement recevant ou émettant des flux « non GBR » est extrêmement dégradée. De plus, les débits cibles garantis GBR ne peuvent pas tous être respectés, et le service client (par exemple la vidéo HD, 3D, etc.) peut être perturbé.

Pour éviter la situation de congestion GBR non maitrisée dans la cellule, un opérateur peut mettre en place des mécanismes limitant le volume de ressources radio utilisables pour les configurations GBR (« slice » par exemple). Quand le volume théorique de ressources radio requis pour servir les flux GBR atteint ce seuil de ressources « GBR » autorisé, il y a pénurie. Un intérêt de ces mécanismes est que les flux BE peuvent être servis par les ressources radio préservées grâce à ce mécanisme.

Dans les deux derniers cas de congestion non maitrisée, les solutions proposées ne permettent pas de maintenir la qualité de service de manière équitable pour l'ensemble des équipements d'une cellule desservie par une station de base.

Il existe donc un besoin pour une nouvelle technique d'allocation des ressources radio aux équipements de communication attachées à une station de base. WO 2020/125525 concerne l'allocation des ressources en voie descendante, pour un unique terminal, et plus précisément la sélection d'un type d'allocation (type 0, type 1).

### 3. Exposé de l'invention

L'invention propose une solution ne présentant pas l'ensemble des inconvénients de l'art antérieur, sous la forme d'un procédé de communication entre une station de base et au moins un équipement de communication attaché à la station de base, ledit au moins un équipement de communication comprenant un équipement client.

Selon l'invention, un tel procédé comprend :
- obtention d'au moins une première valeur de qualité d'un lien radio sens montant ou sens descendant entre la station de base et l'équipement client,
- allocation des ressources radios audit au moins un équipement attaché à la station de base (i.e. à l'équipement client attaché à la station de base et, le cas échéant, à au moins un autre équipement attaché à la station de base) selon un schéma d'allocation mettant en œuvre une première configuration de QoS radio dépendante de ladite au moins une première valeur sens montant ou sens descendant pour au moins un flux émis ou reçu par l'équipement client,
- si au moins une valeur courante de qualité du lien radio sens montant ou sens descendant entre la station de base et l'équipement client, obtenue à partir d'au moins une mesure effectuée par l'équipement client ou la station de base, est associée à un niveau de qualité de lien radio inférieur à ladite au moins une première valeur sens montant ou sens descendant respectivement, allocation des ressources radios audit au moins un équipement attaché à la station de base selon un schéma d'allocation mettant en œuvre une deuxième configuration de QoS radio pour au moins un flux émis ou reçu par l'équipement client, ladite deuxième configuration présentant un niveau de qualité de service radio inférieur à ladite première configuration.

Ainsi, selon l'invention, on obtient, par exemple au cours d'une première phase, une première valeur de qualité du lien radio entre la station de base et l'équipement client en sens montant et/ou une première valeur de qualité du lien radio entre la station de base et l'équipement client descendant.

Cette première valeur de qualité du lien radio en sens montant et/ou descendant peut-être associée à la première configuration de QoS.

La station de base peut ainsi allouer des ressources radios à l'équipement client et éventuellement aux autres équipements qu'elle dessert selon un schéma d'allocation mettant en œuvre cette première configuration de QoS radio (par exemple de type allocation avec priorisation stricte à débit garanti), pour au moins un flux émis ou reçu par l'équipement client.

Si la qualité du lien radio entre la station de base et l'équipement client en sens montant et/ou descendant se dégrade, la station de base peut modifier le schéma d'allocation pour allouer des ressources radios en mettant en œuvre une deuxième configuration de QoS radio pour au moins un flux émis ou reçu par l'équipement client (par exemple de type allocation avec priorisation relative ou « best effort »), par exemple au cours d'une deuxième phase mettant en œuvre au moins une itération.

De cette façon, on conditionne le maintien des règles de QoS appliquées à au moins un flux de l'équipement client à la qualité observée du lien radio entre la station de base et l'équipement client. Si la qualité du lien radio se dégrade (soit dans le sens montant, soit dans le sens descendant, soit dans les deux sens, selon le mode de réalisation), la station de base remplace par exemple la configuration initiale des mécanismes de QoS (première configuration de QoS radio) par une configuration moins favorable pour l'équipement client (deuxième configuration de Qos radio).

En d'autres termes, la solution proposée permet d'activer des mécanismes de différentiation de QoS pour un équipement client en maitrisant la quantité de ressources radio consommée par cet accès. Par exemple, si le lien radio est de bonne qualité (comme au cours de la première phase), la quantité de ressources radio pour maintenir un débit garanti est raisonnable, et la station de base peut activer une première configuration associée à une allocation avec priorisation stricte à débit garanti pour au moins un flux de l'équipement client. En revanche, si le lien radio est de moins bonne qualité, la quantité de ressources radio pour maintenir un débit garanti est très élevée, et la station de base peut activer une deuxième configuration associée à une allocation avec priorisation relative ou de type BE pour au moins un flux de l'équipement client. On note que les raisons de la dégradation peuvent être multiples : dégradation de l'antenne de l'équipement client, de son support, apparition d'un obstacle (construction d'un mur, bâtiment, croissance d'un arbre...), conditions météorologiques, etc.

Il est ainsi possible d'aider à contrôler les perturbations occasionnées aux autres équipements attachés à la station de base par rapport à une planification établie par l'opérateur (initialement par exemple).

Par exemple, les première et deuxième configuration de qualité de service radio appartiennent au groupe comprenant :
- une configuration associée à une allocation de ressources radios classique de type « best effort » (pour la deuxième configuration uniquement) ;
- une configuration associée à une allocation de ressources radios avec priorisation relative ;
- une configuration associée à une allocation de ressources radios avec priorisation stricte à débit garanti.

Dans tous les cas, la deuxième configuration de QoS radio présente un niveau de qualité inférieur à la première configuration. Par exemple, la première configuration est de type configuration associée à une allocation avec priorisation stricte à débit garanti, et la deuxième configuration est de type configuration associée à une allocation avec priorisation relative ou de type BE.

Selon un mode de réalisation particulier, le procédé met en œuvre, préalablement à l'allocation des ressources radios selon un schéma d'allocation mettant en œuvre une deuxième configuration de qualité de service radio, la réception de ladite moins une valeur courante sens descendant, en provenance de l'équipement client.

L'équipement client peut ainsi effectuer une ou plusieurs mesures de qualité du lien radio en sens descendant, à différents instants, pour obtenir une ou plusieurs valeurs de qualité du lien radio sens descendant, et remonter la ou les valeurs courantes à la station de base, ou une moyenne de ces valeurs courantes. Il est ainsi possible, par exemple, de disposer d'informations sur la qualité du lien radio en temps réel.

Selon un autre mode de réalisation, le procédé met en œuvre, préalablement à l'allocation des ressources radios selon un schéma d'allocation mettant en œuvre une deuxième configuration de qualité de service radio, la réception d'une notification en provenance de l'équipement client, informant la station de base que ladite au moins une valeur courante sens descendant est associée à un niveau de qualité de lien radio inférieur à ladite au moins une première valeur sens descendant.

L'équipement client peut ainsi effectuer une ou plusieurs mesures de qualité du lien radio en sens descendant, à différents instants, pour obtenir une ou plusieurs valeurs de qualité du lien radio sens descendant, et comparer la ou les valeurs courantes sens descendant à la première valeur sens descendant. Si au moins une valeur courante présente un niveau de qualité radio inférieur à la première valeur, une notification peut être transmise à la station de base.

Selon ces différents modes de réalisation, la station de base peut ainsi connaître en « temps réel » la valeur courante de qualité du lien radio pour l'équipement client (ou tout autre équipement transmettant ces informations à la station de base), ou plus simplement recevoir une notification lorsque la valeur courante change de manière suffisante pour être prise en compte.

Selon un mode de réalisation particulier, l'allocation des ressources radios selon un schéma d'allocation mettant en œuvre une deuxième configuration de qualité de service radio est mise en œuvre lorsque plusieurs valeurs courantes successives sens montant ou sens descendant sont associées à un niveau de qualité de lien radio inférieur à ladite au moins une première valeur sens montant ou sens descendant respectivement.

Ainsi, dans certains modes de réalisation, la station de base peut ne pas modifier l'allocation des ressources pour l'équipement client, pour passer d'une première configuration à une deuxième configuration, en cas de dégradation ponctuelle du lien radio. Par exemple, une plage temporelle peut être définie par l'opérateur de l'ordre de quelques secondes, quelques minutes ou quelques heures. Si plus de la moitié des valeurs courantes mesurées sur cette plage temporelle présente un niveau de qualité de lien radio inférieur à la première valeur, la station de base peut modifier l'allocation des ressources pour au moins un flux de l'équipement client pour passer d'une première configuration à une deuxième configuration.

De même, une notification telle que décrite ci-dessus peut être transmise à la station de base uniquement si plus de la moitié des valeurs courantes mesurées sur une plage temporelle définie présente un niveau de qualité de lien radio inférieur à la première valeur.

Selon un mode de réalisation particulier, le procédé met en outre en œuvre :
- si au moins une nouvelle valeur courante de qualité du lien radio sens montant ou sens descendant entre ladite station de base et ledit équipement client, obtenue à partir d'au moins une nouvelle mesure effectuée par ledit équipement client ou ladite station de base, est associée à un niveau de qualité de lien radio supérieur ou égal à au moins une deuxième valeur de qualité d'un lien radio entre la station de base et l'équipement client, sens montant ou sens descendant respectivement, allocation des ressources radios audit au moins un équipement attaché à ladite station de base selon un schéma d'allocation mettant en œuvre ladite première configuration de qualité de service radio pour au moins un flux émis ou reçu par ledit équipement client.

Selon ce mode de réalisation, la station de base peut de nouveau modifier l'allocation des ressources radio pour revenir à la première configuration pour au moins un flux de l'équipement client, lorsque la qualité du lien radio en sens montant et/ou descendant, l'un ou l'autre, n'est plus dégradée par exemple, ou est moins dégradée.

Par exemple, ladite au moins une première et/ou seconde valeur ou valeur courante sens montant ou sens descendant appartient au groupe comprenant :
- une puissance reçue d'un signal de référence (ou RSRP, en anglais « Reference Signal Receive Power ») ;
- un indicateur de qualité du canal (ou CQI, en anglais « Channel Quality Indicator ») ;
- un indicateur construit à partir du CQI ;
- un indicateur d'état du canal (ou CSI, en anglais « Channel State Information) ;
- un indicateur construit à partir du CSI, par exemple un indicateur CRI-RI-PMI-CQI (avec RI un indicateur de rang « Rank Indicator ») et PMI un indicateur de matrice de pré-codage (« Precoding Matrix Indicator ») ;
- etc.

La RSRP est une valeur moyenne de la puissance reçue du signal de référence émis par la station de base. Il s'agit d'une mesure simple, réalisée par la couche physique de l'équipement de communication, qui s'exprime en Watt ou en dBm. La valeur est classiquement comprise entre -140 dBm (lien radio de mauvaise qualité) à -44 dBm (lien radio de très bonne qualité).

La RSRP permet donc de mesurer une première et/ou seconde valeur et/ou valeur courante de qualité du lien radio en sens descendant à un instant ou sur une plage temporelle. La RSRP peut également être utilisée estimer la qualité du lien radio en sens montant.

Le CQI est un indicateur sur la qualité du lien radio, déterminé par l'équipement de communication. Il peut être utilisé par la station de base, notamment par l'ordonnanceur (« scheduler ») pour déterminer la modulation à utiliser à un instant t.

Le CQI permet donc de mesurer une première et/ou seconde valeur et/ou valeur courante de qualité du lien radio en sens descendant à un instant ou sur une plage temporelle.

Le CSI, ou CRI-RI-PMI-CQI, peut notamment être utilisé pour estimer la qualité du lien radio en sens montant.

D'autres indicateurs peuvent également être utilisés pour obtenir une première et/ou seconde valeur et/ou valeur courante, en sens montant et/ou en sens descendant.

Selon un mode de réalisation particulier, la deuxième valeur sens montant et/ou sens descendant est égale à la première valeur sens montant et/ou sens descendant.

En variante, la deuxième valeur sens montant et/ou sens descendant est différente de la première valeur sens montant et/ou sens descendant.

En particulier, ladite allocation des ressources radios selon un schéma d'allocation mettant en œuvre ladite première configuration de qualité de service radio pour au moins un flux émis ou reçu par ledit équipement client est mise en œuvre si ladite au moins une nouvelle valeur courante de qualité du lien radio sens montant est supérieure à ladite au moins une deuxième valeur sens montant et si ladite au moins une nouvelle valeur courante de qualité du lien radio sens descendant est supérieure à ladite au moins une deuxième valeur sens descendent.

En d'autres termes, dans certains modes de réalisation, la station de base peut de nouveau modifier l'allocation des ressources radio pour revenir à la première configuration pour au moins un flux de l'équipement client, lorsque la qualité du lien radio en sens montant et en sens descendant n'est plus dégradée, ou est moins dégradée.

Selon un mode de réalisation particulier, l'allocation des ressources radios selon un schéma d'allocation mettant en œuvre une deuxième configuration de qualité de service radio met en œuvre ladite première configuration de qualité de service radio pour au moins un flux émis ou reçu par un équipement attaché à ladite station de base, distinct dudit équipement client.

En d'autres termes, dans certains modes de réalisation, le passage d'une première configuration à une deuxième configuration de qualité de service radio concerne uniquement l'équipement client, pour lequel la qualité du lien radio est dégradée. La configuration du ou des autres équipements attachés à la station de base peut se faire indépendamment du changement de configuration pour l'équipement client.

Le schéma d'allocation peut ainsi allouer des ressources radio selon la deuxième configuration de qualité de service pour l'équipement client, et selon la première configuration de qualité de service pour au moins un autre équipement attaché à la station de base.

Selon un mode de réalisation particulier, ladite au moins une première valeur de qualité d'un lien radio sens montant ou sens descendant entre la station de base et l'équipement client, et/ou ladite au moins une deuxième valeur de qualité d'un lien radio sens montant ou sens descendant entre la station de base et l'équipement client, est obtenue à partir :
- d'au moins une mesure effectuée par ledit équipement client ;
- d'au moins une mesure effectuée par ladite station de base ;
- d'une lecture dans une table, un abaque, etc.

Ainsi, selon un premier exemple, l'équipement client effectue une ou plusieurs mesures de qualité du lien radio en sens descendant, à différents instants, et remonte cette ou ces mesures à la station de base, ou une moyenne de ces mesures. La première/deuxième valeur sens descendant peut être obtenue à partir de cette ou ces mesures, ou de la moyenne de ces mesures.

Selon un deuxième exemple, la station de base effectue une ou plusieurs mesures de qualité du lien radio en sens montant, à différents instants. La première/deuxième valeur sens montant peut être obtenue à partir de cette mesure ou de la moyenne de ces mesures.

En particulier, la première/deuxième valeur sens montant et/ou sens descendant peut être déterminée lorsque l'équipement est stable, au sens géographique (sa position est sensiblement fixe) et/ou radio (son canal de transmission varie peu). Par exemple, l'équipement est un terminal mobile qui reste dans un rayon de 25 mètres autour d'une position initiale) pendant un certain temps (par exemple pendant au moins 3 à 5 minutes). Dans ce cas, le terminal est équipé de moyens de géolocalisation, permettant de déterminer que sa position est sensiblement fixe.

Selon un troisième exemple, la première/deuxième valeur sens montant et/ou sens descendant est une valeur théorique, obtenu à partir de tables comme des tables, d'abaques, etc.

Selon un quatrième exemple, la première/deuxième valeur sens montant et/ou sens descendant correspond à un seuil d'acceptabilité de la qualité du lien radio défini par l'opérateur.

Dans un mode de réalisation particulier, le procédé comprend, par exemple au cours de la première phase, des étapes préalables d'obtention d'au moins une valeur de référence de qualité d'un lien radio sens montant ou sens descendant entre la station de base et l'équipement client, et de vérification que ladite au moins une première valeur sens montant ou sens descendant est associée à un niveau de qualité de lien radio supérieur ou égal à ladite au moins une valeur de référence sens montant ou sens descendant respectivement.

Dans ce cas, la première valeur en sens montant, respectivement descendant, peut par exemple être mesurée à l'installation de l'équipement, et comparée avec une valeur de référence en sens montant, respectivement descendant, obtenue à partir d'une table, d'abaque, etc.

Ces étapes peuvent permettre de valider que la première valeur « pratique » en sens montant et/ou descendant est associée à un niveau de qualité de lien radio supérieur ou égal à la valeur de référence « théorique » en sens montant et/ou descendant.

Un autre mode de réalisation concerne une station de base correspondante, configurée pour communiquer avec au moins un équipement de communication, ledit au moins un équipement de communication comprenant un équipement client, comprenant :
- des moyens d'obtention d'au moins une première valeur de qualité d'un lien radio sens montant ou sens descendant entre ladite station de base et ledit équipement client,
- des moyens d'allocation des ressources radios audit au moins un équipement attaché à ladite station de base selon un schéma d'allocation mettant en œuvre une première configuration de qualité de service radio dépendante de ladite au moins une première valeur sens montant ou sens descendant pour au moins un flux émis ou reçu par ledit équipement client,
- des moyens d'allocation des ressources radios audit au moins un équipement attaché à ladite station de base selon un schéma d'allocation mettant en œuvre une deuxième configuration de qualité de service radio pour au moins un flux émis ou reçu par ledit équipement client, activés si au moins une valeur courante de qualité du lien radio sens montant ou sens descendant entre ladite station de base et ledit équipement client, obtenue à partir d'au moins une mesure effectuée par ledit équipement client ou ladite station de base, est associée à un niveau de qualité de lien radio inférieur à ladite au moins une première valeur sens montant ou sens descendant respectivement, ladite deuxième configuration présentant un niveau de qualité de service radio inférieur à ladite première configuration.

Une telle station de base est notamment adaptée à mettre en œuvre le procédé de communication décrit précédemment. Il s'agit par exemple d'un eNodeB ou gNode. Une telle station de base pourra bien sûr comporter les différentes caractéristiques relatives au procédé selon l'invention, qui peuvent être combinées ou prises isolément. Ainsi, les caractéristiques et avantages de la station de base sont les mêmes que ceux du procédé décrit précédemment. Par conséquent, ils ne sont pas détaillés plus amplement.

L'invention concerne également un procédé de gestion de communication entre une station de base et au moins un équipement de communication attaché à la station de base, ledit au moins un équipement de communication comprenant un équipement client, comprenant, mis en œuvre par ledit équipement client :
- obtention d'au moins une première valeur de qualité d'un lien radio sens descendant entre la station de base et l'équipement client,
- si ladite au moins une première valeur sens descendant est mesurée par l'équipement client, transmission de ladite au moins une première valeur sens descendant à la station de base, destinée à être utilisée par la station de base pour l'allocation des ressources radios audit au moins un équipement attaché à la station de base selon un schéma d'allocation mettant en œuvre une première configuration de qualité de service radio dépendante de ladite au moins une première valeur sens descendant pour au moins un flux émis ou reçu par l'équipement client,
- mesure d'au moins une valeur courante de qualité du lien radio sens descendant entre la station de base et l'équipement client,
- transmission de ladite au moins une valeur courante sens descendant à la station de base, ou d'une notification informant la station de base que ladite au moins une valeur courante sens descendant est associée à un niveau de qualité de lien radio inférieur à ladite au moins une première valeur sens descendant, ladite au moins une valeur courante sens descendant ou ladite notification étant destinée à être utilisée par la station de base pour l'allocation des ressources radios audit au moins un équipement attaché à la station de base selon un schéma d'allocation mettant en œuvre une deuxième configuration de qualité de service radio pour au moins un flux émis ou reçu par l'équipement client, ladite deuxième configuration présentant un niveau de qualité de service radio inférieur à ladite première configuration.

Selon l'invention, l'équipement client peut ainsi informer la station de base en temps réel, si la qualité du lien radio entre la station de base et l'équipement client se dégrade. Une partie du traitement (« monitoring ») est ainsi déplacée de la station de base vers l'équipement client. De cette façon, la station de base peut modifier le schéma d'allocation pour allouer des ressources radios selon une deuxième configuration de QoS radio pour au moins un flux émis ou reçu par l'équipement client (par exemple de type allocation avec priorisation relative ou « best effort »).

On note que si ladite au moins une première valeur sens descendant est préalablement connue de la station de base (par exemple obtenue à partir d'une table, comme une table de référence), il n'est pas utile de la transmettre de l'équipement client vers la station de base.

En particulier, l'équipement client peut mettre en œuvre une étape de détermination de sa position géographique. Sa position géographique peut notamment être déterminée pour chaque mesure d'au moins une valeur courante. Une information représentative de cette position peut être remontée à la station de base.

Il est ainsi possible de déterminer si la position de l'équipement client est sensiblement fixe.

L'invention concerne également un équipement client correspondant, configuré pour communiquer avec une station de base, comprenant :
- des moyens d'obtention d'au moins une première valeur de qualité d'un lien radio sens descendant entre ladite station de base et ledit équipement client,
- des moyens de transmission de ladite au moins une première valeur sens descendant à ladite station de base, destinée à être utilisée par ladite station de base pour l'allocation des ressources radios à au moins un équipement attaché à ladite station de base selon un schéma d'allocation mettant en œuvre une première configuration de qualité de service radio dépendante de ladite au moins une première valeur sens descendant pour au moins un flux émis ou reçu par ledit équipement client, activés si ladite au moins une première valeur est mesurée par l'équipement client, ledit au moins un équipement attaché à ladite station de base comprenant ledit équipement client,
- des moyens de mesure d'au moins une valeur courante de qualité du lien radio sens descendant entre ladite station de base et ledit équipement client,
- des moyens de transmission de ladite au moins une valeur courante sens descendant à ladite station de base, ou d'une notification informant ladite station de base que ladite au moins une valeur courante sens descendant est associée à un niveau de qualité de lien radio inférieur à ladite au moins une première valeur sens descendant, ladite au moins une valeur courante sens descendant ou ladite notification étant destinée à être utilisée par ladite station de base pour l'allocation des ressources radios audit au moins un équipement attaché à ladite station de base selon un schéma d'allocation mettant en œuvre une deuxième configuration de qualité de service radio pour au moins un flux émis ou reçu par ledit équipement client, ladite deuxième configuration présentant un niveau de qualité de service radio inférieur à ladite première configuration.

Un tel équipement est notamment adapté à mettre en œuvre le procédé de gestion de communication décrit précédemment. Par exemple, un tel équipement est un équipement mobile du réseau (téléphone mobile, smartphone, ordinateur portable, etc, notamment apte à communiquer sur un réseau LTE ou NG) ou un équipement intermédiaire fixe installé dans le site d'un client (particulier, entreprise...) et qui est raccordé à l'infrastructure d'un opérateur/fournisseur de service (CPE).

Selon un mode de réalisation particulier, un tel équipement est équipé de moyens de géolocalisation, par exemple un GPS.

L'équipement client pourra bien sûr comporter les différentes caractéristiques relatives au procédé selon l'invention, qui peuvent être combinées ou prises isolément. Ainsi, les caractéristiques et avantages de l'équipement client sont les mêmes que ceux du procédé décrit précédemment. Par conséquent, ils ne sont pas détaillés plus amplement.

L'invention concerne encore un ou plusieurs programmes d'ordinateur comportant des instructions pour la mise en œuvre d'un procédé de communication ou d'un procédé de gestion de communication tels que décrits ci-dessus lorsque ce ou ces programmes sont exécutés par au moins un processeur.

L'invention concerne par ailleurs un ou plusieurs supports d'enregistrement lisibles par un ordinateur, sur lequel sont enregistrés un ou plusieurs programmes d'ordinateur comprenant des instructions de code de programme pour l'exécution d'au moins une étape d'un procédé de communication ou d'un procédé de gestion de communication tels que décrits ci-dessus, selon l'un quelconque des modes de réalisation. De tels supports d'enregistrement peuvent être n'importe quelle entité ou dispositif capable de stocker un programme.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la [Fig 1] présente les principales étapes mises en œuvre selon un mode de réalisation particulier de l'invention ;
- la [Fig 2] présente l'allocation classique des ressources radio dans un contexte de congestion globale maitrisée ;
- la [Fig 3A] illustre l'allocation classique des ressources radio dans un contexte de congestion globale non maitrisée ;
- la [Fig 3B] illustre l'allocation des ressources radio dans un contexte de congestion globale non maitrisée selon un mode de réalisation de l'invention ;
- la [Fig 4A] illustre l'allocation classique des ressources radio dans un contexte de congestion GBR non maitrisée ;
- la [Fig 4B] illustre l'allocation des ressources radio dans un contexte de congestion GBR non maitrisée selon un mode de réalisation de l'invention ;
- la [Fig 5] présente un exemple d'utilisation d'un indicateur de qualité radio de type CQI selon un mode de réalisation de l'invention ;
- la [Fig 6] présente la structure simplifiée d'une station de base selon un mode de réalisation particulier ;
- la [Fig 7] présente la structure simplifiée d'un équipement client selon un mode de réalisation particulier.

### 5. Description d'un mode de réalisation particulier

### 5.1 Principe général

On se place dans le contexte d'un réseau de communication mettant en œuvre une station de base (par exemple eNodeB, gNode, etc) et au moins un équipement de communication (par exemple un terminal, un CPE, etc) localisé dans la cellule desservie par la station de base, ledit au moins un équipement de communication comprenant un équipement client.

Le principe général de l'invention repose sur un changement de la configuration de qualité de service radio appliquée à au moins un flux d'un équipement de communication, pour passer d'une première configuration à une deuxième configuration présentant à un niveau de qualité de service radio inférieur, lorsque la qualité du lien radio entre la station de base et l'équipement de communication se dégrade.

Par exemple, la première configuration peut être associée à une allocation avec priorisation stricte avec un premier débit garanti (par exemple négocié au préalable avec l'opérateur) et la deuxième configuration peut être associée à une allocation avec priorisation stricte avec un deuxième débit garanti, inférieur au premier débit garanti.

Selon un autre exemple, la première configuration peut être associée à une allocation avec priorisation stricte avec un débit garanti et la deuxième configuration peut être associée à une allocation avec priorisation relative.

Selon encore un autre exemple, la première configuration peut être associée à une allocation avec priorisation stricte avec un débit garanti et la deuxième configuration peut être associée à une allocation « best effort ».

Selon un dernier exemple, la première configuration peut être associée à une allocation avec priorisation relative et la deuxième configuration peut être associée à une allocation « best effort ».

La solution proposée peut ainsi, dans au moins certains modes de réalisation, aider à améliorer la qualité de service pour le ou les équipements localisés dans la cellule desservie par la station de base par rapport à au moins certaines solutions de l'art antérieur, notamment dans les deux cas de congestion non maitrisée présentés en relation avec l'art antérieur.

En particulier, l'invention propose une nouvelle solution pour l'allocation des ressources radios aux équipements de communication attachés à la station de base, permettant, selon un mode de réalisation particulier, d'optimiser la qualité de service pour l'ensemble des équipements localisés dans la cellule desservie par la station de base.

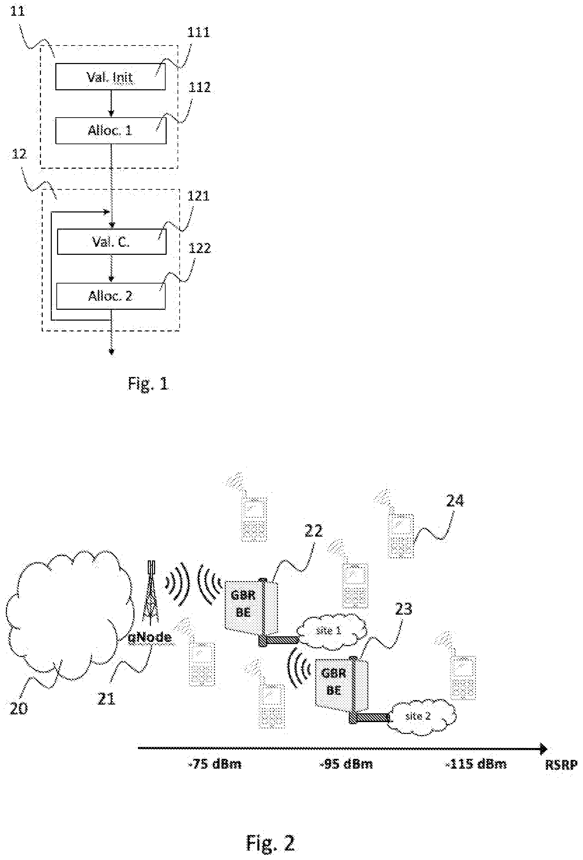

On présente ci-après, en relation avec la figure 1, les principales étapes mises en œuvre par la station de base selon certains modes de réalisation de l'invention.

Au cours d'une première phase 11, dite phase d'initialisation, une première valeur de qualité d'un lien radio entre la station de base et un équipement client attaché à la station de base sens montant et/ou une première valeur de qualité du lien radio entre la station de base et l'équipement client sens descendant peuvent être obtenues (111). De telles premières valeurs sens montant et/ou descendant peuvent être obtenues à partir d'au moins une mesure de qualité du lien radio effectuée par l'équipement client, d'au moins une mesure de qualité du lien radio effectuée par la station de base, d'une lecture dans une table, etc.

La station de base (ou le « scheduler ») peut allouer (112) des ressources radios à l'équipement client, et, le cas échéant, à au moins un autre équipement attaché à la station de base, selon un schéma d'allocation mettant en œuvre par exemple, pour au moins un flux émis ou reçu par l'équipement client, une première configuration de qualité de service radio dépendante de la ou des premières valeurs sens montant et/ou descendant (par exemple en utilisant un « bearer » GBR dédié).

Par exemple, si la première valeur de qualité de lien radio est de l'ordre de -70dBm, ce qui signifie que le lien radio est de bonne qualité, la première configuration de qualité de service radio peut être associée à une allocation avec priorisation stricte à débit garanti, avec un débit élevé, par exemple de l'ordre de quelques dizaines de méga bits par seconde. Si la première valeur de qualité de lien radio est de l'ordre de -95dBm, ce qui signifie que le lien radio est de qualité moyenne, la première configuration de qualité de service radio peut être associée à une allocation avec priorisation stricte à débit garanti avec un débit moyen, par exemple de l'ordre de quelques méga bits par seconde, ou à une allocation avec priorisation relative.

Au cours d'une deuxième phase 12, dite phase de fonctionnement, plusieurs valeurs de qualité de lien radio en sens montant et/ou descendant, dites valeurs courantes sens montant et/ou descendant, peuvent être mesurées à différents instants. Les valeurs courantes sens montant peuvent être obtenues à partir d'au moins une mesure de qualité du lien radio effectuée par la station de base (121), et les valeurs courantes sens descendant peuvent être obtenues à partir d'au moins une mesure de qualité du lien radio effectuée par l'équipement client. Éventuellement, l'équipement client peut transmettre les mesures / valeurs courantes à la station de base.

Éventuellement, une valeur courante moyenne sens descendant et/ou sens montant peut être déterminée pour une plage temporelle donnée, par la station de base et/ou par l'équipement client. La ou les valeurs courantes (éventuellement moyennées) sens descendant et/ou montant, peu(ven)t être comparées à la première valeur sens descendant et/ou montant respectivement. Cette comparaison peut être effectuée par la station de base ou par l'équipement client, selon les informations dont la station de base ou l'équipement client dispose. Si la comparaison est effectuée par l'équipement client, l'équipement client peut remonter une notification à la station de base pour l'informer du résultat de la comparaison (valeur courante sens descendant et/ou montant associée à un niveau de qualité inférieur à la première valeur sens descendant et/ou montant, ou changement significatif de la valeur courante sens descendant et/ou montant, etc).

Si la qualité du lien radio entre la station de base et l'équipement client se dégrade, i.e. si :
- une valeur courante sens descendant et/ou montant, ou
- une valeur courante moyenne sens descendant et/ou sens montant sur une plage temporelle donnée, ou
- au moins une valeur courante sens descendant et/ou montant sur une plage temporelle donnée, est associée à un niveau de qualité inférieur à la première valeur sens descendant et/ou montant respectivement, la station de base (ou le « scheduler ») peut allouer (122) des ressources radios à l'équipement client et, le cas échéant, à au moins un autre équipement attaché à la station de base, selon un schéma d'allocation mettant en œuvre, pour au moins un flux émis ou reçu par l'équipement client, une deuxième configuration de qualité de service radio présentant un niveau de qualité de service radio inférieur à la première configuration (par exemple en utilisant un « bearer » non-GBR dédié).

Selon un mode de réalisation particulier, il est également possible de rester à la première configuration de qualité de service radio pour au moins un flux émis ou reçu par l'équipement client si la qualité du lien radio entre la station de base et l'équipement client reste stable, ou de revenir à la première configuration de qualité de service radio pour au moins un flux émis ou reçu par l'équipement client si la qualité du lien radio entre la station de base et l'équipement client s'améliore, i.e. si :
- une nouvelle valeur courante sens descendant et/ou montant, ou
- une nouvelle valeur courante moyenne sens descendant et/ou montant sur une plage temporelle donnée, ou
- au moins une nouvelle valeur courante sens descendant et/ou montant sur une plage temporelle donnée,
est associée à un niveau de qualité de lien radio supérieur ou égal à une deuxième valeur de qualité d'un lien radio entre la station de base et l'équipement client, sens descendant et/ou montant respectivement.

La phase de fonctionnement peut mettre en œuvre au moins une itération des étapes décrites ci-dessus. Ainsi, de nouvelles mesures de la qualité du lien radio sens montant et/ou descendant entre la station de base et l'équipement client peuvent être effectuées régulièrement, par exemple toutes les secondes, toutes les 30 secondes, toutes les minutes, ou lorsqu'une modification du canal est détectée. On peut disposer ainsi d'informations sur la qualité du lien radio en « temps réel ». L'allocation des ressources radios des différents équipements attachés à la station de base peut être mise à jour en tenant compte l'évolution de la qualité du lien radio sens montant et/ou descendant entre la station de base et l'équipement client.

### 5.2 Exemple de mise en œuvre

On décrit ci-après un exemple de mise en œuvre de l'invention, dans un réseau comprenant une station de base et une pluralité d'équipements de communication.

On s'attache ci-après à décrire l'utilisation de la qualité du lien radio entre la station de base et au moins un équipement de communication, dit équipement client, en sens descendant, pour optimiser l'allocation des ressources. Bien entendu, il s'agit d'un simple exemple, et la qualité du lien radio en sens montant peut également être utilisée, seule ou en combinaison avec la qualité du lien radio en sens descendant, pour optimiser l'allocation des ressources.

Selon l'exemple illustré en figure 2, on considère une station de base 21, un premier équipement de communication installé sur un premier site client, par exemple un CPE1 d'entreprise ou résidentiel 22 permettant un accès FWA (« Fixed Wireless Access »), un deuxième équipement de communication installé sur un deuxième site client, par exemple un CPE2 d'entreprise ou résidentiel 23 permettant également un accès FWA, et une pluralité de terminaux 24. La station de base communique avec le cœur de réseau 20.

A l'installation du CPE1 22, le CPE1 22 peut mesurer une première valeur de qualité d'un lien radio sens descendant entre la station de base et le CPE1 22, par exemple en mesurant la puissance de réception d'un signal de référence.

Cette première valeur, notée RSRP1, peut notamment être transmise à la station de base, ou à l'opérateur, pour vérifier qu'elle est bien associée à un niveau de qualité supérieur ou égal à une valeur (de référence par exemple) connue de la station de base, ou de l'opérateur. Par exemple, une telle valeur est définie à partir de tables comme des tables de référence ou d'abaques.

En variante, un seuil d'acceptabilité de qualité du lien radio peut être défini, et la station de base, ou l'opérateur, peut vérifier que la première valeur est bien associée à un niveau de qualité supérieur ou égal au seuil d'acceptabilité. Un tel seuil d'acceptabilité peut notamment être défini à partir d'un compromis entre la charge estimée dans la cellule et le débit garanti souhaité.

Ainsi, selon au moins un mode de réalisation, l'opérateur peut déterminer à l'avance un débit garanti, un nombre d'utilisateurs/ou de flux GBR par cellule, un seuil d'acceptabilité de qualité de lien radio (à partir duquel un utilisateur ou un flux peut obtenir un débit garanti GBR).

Selon l'exemple illustré en figure 2, cette valeur RSRP1 est par exemple de l'ordre de -80dBm.

La station de base / l'opérateur indique alors si l'accès du premier site client est éligible, et si les débits garantis souhaités sont autorisés. Sinon, l'opérateur peut proposer des débits garantis moins élevés ou des débits non garantis.

On suppose ci-après que les débits garantis souhaités sont autorisés. La station de base peut donc allouer des ressources aux différents équipements de sa cellule. Elle peut notamment mettre en œuvre une configuration de qualité de service radio associée à une allocation avec priorisation GBR pour au moins un flux entrant ou sortant du CPE1 22 du premier site client, et une allocation « best effort » pour au moins un autre flux entrant ou sortant du CPE1 22 du premier site client.

De façon similaire, la station de base peut mettre en œuvre une configuration de qualité de service radio associée à une allocation avec priorisation GBR pour au moins un flux entrant ou sortant du CPE2 23 du deuxième site client, et une allocation « best effort » pour au moins un autre flux entrant ou sortant du CPE2 23 du deuxième site client.

La cellule est donc dans une situation de type hors congestion ou congestion globale maitrisée.

Le CPE1 22 mesure à différents instants la qualité de son lien radio avec la station de base 21, par exemple en mesurant la puissance de réception d'un signal de référence.

Si la valeur courante RSRPc est associée à un niveau de qualité radio inférieur à la première valeur RSRP1, il y a sur-consommation des ressources radio et moins de ressources disponibles (par exemple moins de RB « ressource blocks ») pour les autres équipements dans la cellule.

Si la valeur courante RSRPc est associée à un niveau de qualité radio supérieur ou égal à la première valeur RSRP1, il y a sous-consommation des ressources radio et plus de ressources disponibles (par exemple plus de RB « ressource blocks ») pour les autres équipements dans la cellule.

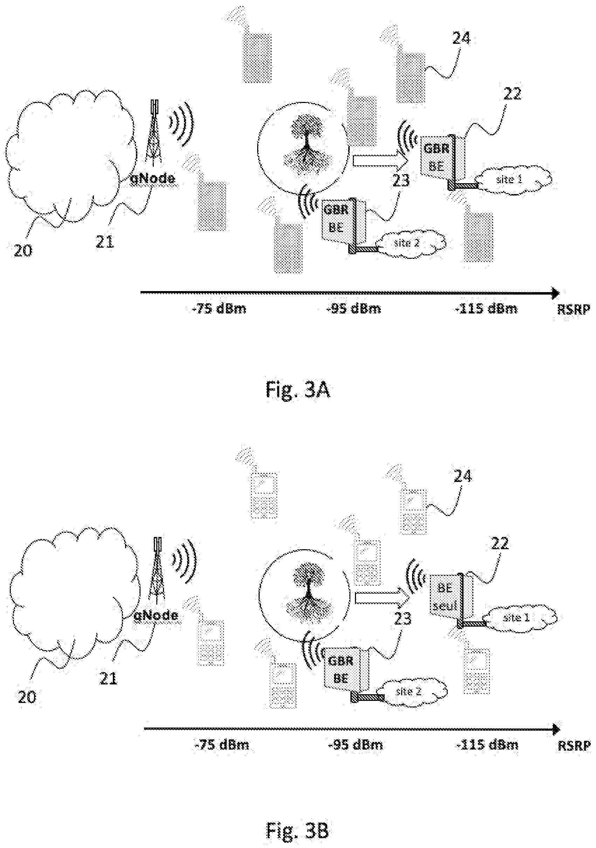

Selon un premier exemple illustré en figures 3A et 3B, on considère qu'au moins une valeur courante RSRPc mesurée par le CPE1 22 du premier site client diminue (en passant par exemple de -80dBm à - 105dBm), par exemple suite à la présence d'un obstacle sur le canal de transmission.

La cellule passe alors dans une situation de type congestion globale non maitrisée.

Dans l'exemple illustré en figure 3A, sans mise en œuvre de l'invention, la station de base 21 alloue des ressources aux différents équipements (CPE1 22, CPE2 23, terminaux 24) et cherche à fournir en priorité un débit cible garanti aux flux des équipements bénéficiant d'une configuration GBR (CPE1 22 et CPE2 23). Les ressources radio restantes sont ensuite affectées aux autres équipements (terminaux 24) et aux flux BE des CPE1 22 et CPE2 23.

Il y a surconsommation des ressources radio pour offrir au CPE1 22 le débit garanti souhaité. Comme la station de base cherche à allouer en priorité des ressources aux flux GBR des CPE1 22 et CPE2 23, il reste peu de ressources radio à allouer aux flux BE des CPE1 22, CPE2 23 et terminaux 24.

Chaque flux BE est donc impacté négativement.

Dans l'exemple illustré en figure 3B, avec mise en œuvre de l'invention, si la valeur courante RSRPc est associée à un niveau de qualité du lien radio sens descendant inférieur à la première valeur RSRP1, la station de base 21 peut modifier la configuration de qualité de service radio pour les flux GBR du CPE1 22 du premier site client. Par exemple, la station de base 21 peut modifier la configuration du traitement des flux GBR du CPE1 22 (première configuration) en BE (deuxième configuration). Les flux initialement GBR émis ou reçus par le CPE1 22 du premier site passent donc en QoS BE. Une alarme peut éventuellement être générée pour informer un équipement en amont de la station de base 21, l'opérateur ou le client, par exemple en utilisant les API (« Application Programming Interface ») SCEF (« Service Capability Exposure Function ») en 4G, ou NEF (« Network Exposure Function ») en 5G. Le client peut utiliser ces API pour être notifié sur évènement pour un équipement donné. Par exemple, il est possible de définir et implémenter une notification du type « QoS dégradation GBR vers BE sur baisse de la qualité radio ».

La station de base 21 cherche à allouer en priorité des ressources aux flux GBR du CPE2 23. Les flux GBR du CPE2 23 du deuxième site client sont donc servis selon la configuration initiale sans problème. L'ensemble des flux BE se partage les ressources radio restantes. Selon ce mode de réalisation, il reste suffisamment de ressources radio à allouer aux flux BE des CPE1 22, CPE2 23 et terminaux 24. Ainsi, si on note n le nombre de flux BE avant « déclassement » des flux GBR émis ou reçus par le CPE 22 du premier site en flux BE, et X le volume de ressources radio disponibles après affectation aux flux GBR, alors les ressources radio pour chaque flux BE passent de X/n (congestion globale maitrisée) à X/(n+1), dans le cas d'un algorithme d'ordonnancement de type « Round Robin ». On note ainsi que plus le nombre de flux BE est élevé, plus l'impact est négligeable. Dans tous les cas, chaque flux BE est mieux servi selon l'invention.

Si la dégradation est ponctuelle, et qu'une nouvelle valeur courante RSRPc mesurée par le CPE 22 du premier site est associée à un niveau de qualité radio supérieure ou égale à une deuxième valeur RSRP2, par exemple égale à la première valeur RSRP1, un retour à la normal est possible.

En d'autres termes, si par la suite une valeur courante RSRPc est associée à un niveau de qualité du lien radio sens descendant supérieure ou égale à la deuxième valeur RSRP2, la station de base 21 peut de nouveau modifier la configuration de qualité de service radio pour les flux GBR du CPE1 22 précédemment déclassés en flux BE. Par exemple, la station de base 21 modifie la configuration du traitement de ces flux BE du CPE1 22 (deuxième configuration) en GBR (première configuration). En d'autres termes, les configurations de QoS GBR sont réinstallées.

Une alarme peut éventuellement être générée pour informer un équipement en amont de la station de base 21, l'opérateur ou le client, par exemple en utilisant un couplage SCEF ou NE comme mentionné précédemment. Dans ce cas, il est possible de définir et implémenter une notification du type « QoS amélioration BE vers GBR sur augmentation de la qualité radio ».

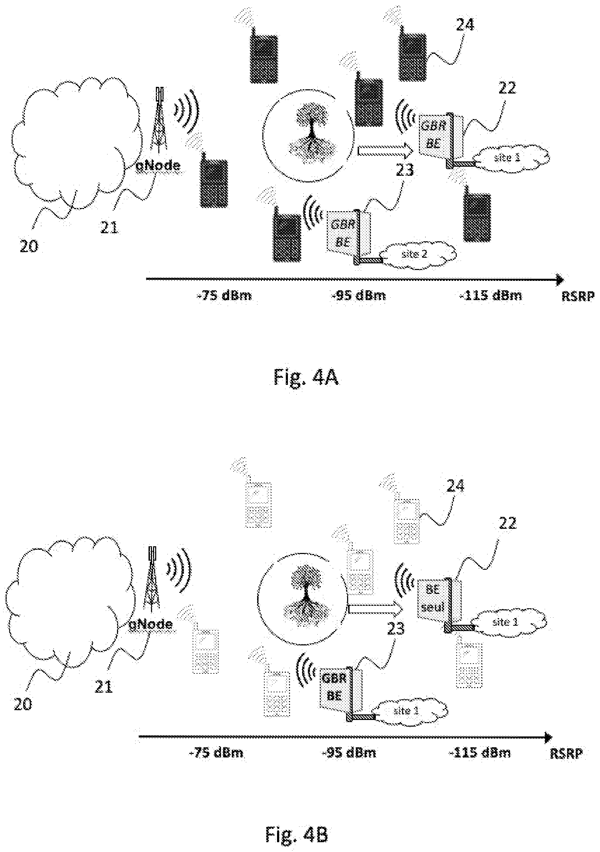

Selon un deuxième exemple illustré en figures 4A et 4B, on considère qu'au moins une valeur courante RSRPc mesurée par le CPE1 22 du premier site client diminue fortement (en passant par exemple de - 80dBm à -120dBm), par exemple suite à la présence d'un obstacle sur le canal de transmission.

La cellule passe alors dans une situation de type congestion GBR non maitrisée.

Dans l'exemple illustré en figure 4A, sans mise en œuvre de l'invention, la station de base 21 alloue des ressources aux différents équipements (CPE1 22, CPE2 23, terminaux 24) et cherche à fournir en priorité un débit cible garanti aux flux des équipements bénéficiant d'une configuration GBR (CPE1 22 et CPE2 23).

Il y a surconsommation des ressources radio pour tenter d'offrir au CPE1 22 le débit garanti souhaité. En particulier, selon cet exemple, le CPE1 22 du premier site surconsomme des ressources radio par rapport au paramétrage initial, au point que le volume de ressources radio théorique nécessaire pour les flux GBR dépasse les capacités de la cellule.

L'ensemble ou une partie des flux GBR des CPE1 22 et CPE2 23 (en fonction des mécanismes de protection activés) est négativement dégradé, les débits minimums garantis ne sont pas atteints.

De plus, l'ensemble des flux BE est impacté négativement.

Dans l'exemple illustré en figure 4B, avec mise en œuvre de l'invention, si la valeur courante RSRPc est associée à un niveau de qualité du lien radio sens descendant inférieur à la première valeur RSRP1, la station de base 21 modifie la configuration de qualité de service radio pour les flux GBR du CPE1 22 du premier site client. Par exemple, la station de base 21 modifie la configuration du traitement des flux GBR du CPE1 22 (première configuration) en BE (deuxième configuration). Les flux initialement GBR émis ou reçus par le CPE1 22 du premier site passent donc en QoS BE. Une alarme peut éventuellement être générée pour informer un équipement en amont de la station de base 21, l'opérateur ou le client, par exemple en utilisant un couplage SCEF ou NEF comme mentionné précédemment, avec par exemple une notification du type « QoS dégradation GBR vers BE sur baisse de la qualité radio ».

La station de base 21 cherche à allouer en priorité des ressources aux flux GBR du CPE2 23. Les flux GBR du CPE2 23 du deuxième site client sont donc servis selon la configuration initiale sans problème. L'ensemble des flux BE se partage les ressources radio restantes. Selon ce mode de réalisation, il reste donc suffisamment de ressources radio à allouer aux flux BE des CPE1 22, CPE2 23 et terminaux 24. Ainsi, si on note n le nombre de flux BE avant « déclassement » des flux GBR émis ou reçus par le CPE 22 du premier site en flux BE, et X le volume de ressources radio disponibles après affectation aux flux GBR, alors les ressources radio pour chaque flux BE passent de X/n (congestion globale maitrisée) à X/(n+1), dans le cas d'un algorithme d'ordonnancement de type « Round Robin ». On note ainsi que plus le nombre de flux BE est élevé, plus l'impact est négligeable. Dans tous les cas, les flux BE sont préservés.

Si la dégradation est ponctuelle, et qu'une nouvelle valeur courante RSRPc mesurée par le CPE 22 du premier site est associée à un niveau de qualité radio supérieure ou égale à une deuxième valeur RSRP2, par exemple égale à la première valeur RSRP1, un retour à la normal est possible.

En d'autres termes, si par la suite une valeur courante RSRPc est associée à un niveau de qualité du lien radio sens descendant supérieure ou égale à la deuxième valeur RSRP2, la station de base 21 peut de nouveau modifier la configuration de qualité de service radio pour les flux GBR du CPE1 22 précédemment déclassés en flux BE. Par exemple, la station de base 21 modifie la configuration du traitement de ces flux BE du CPE1 22 (deuxième configuration) en GBR (première configuration). En d'autres termes, les configurations de QoS GBR sont réinstallées.

Une alarme peut éventuellement être générée pour informer un équipement en amont de la station de base 21, l'opérateur ou le client, par exemple en utilisant un couplage SCEF ou NEF comme mentionné précédemment, avec par exemple une notification du type « QoS amélioration BE vers GBR sur augmentation de la qualité radio » .

Ainsi, selon les exemples présentés ci-dessus, la solution proposée peut aider à fournir de la QoS garantie sur 4G ou 5G à un client pour la connectivité d'un de ses sites client, si les ressources disponibles le permettent. Les paramètres négociés de la QoS peuvent être conservés tant que la qualité du lien radio entre l'antenne du site client (CPE1 22 du premier site client) et la station de base est supérieure ou égale à la première valeur, et donc « acceptable » par l'opérateur.

Comme indiqué précédemment, dans certains modes de réalisation, un seuil d'acceptabilité de qualité du lien radio peut être défini, et la station de base, ou l'opérateur, vérifie que la première valeur est bien associée à un niveau de qualité supérieur ou égal au seuil d'acceptabilité.

La notion d'« acceptabilité » du lien radio peut par exemple dépendre d'un compromis entre la charge dans la cellule, le débit garanti et la qualité du lien radio. Si la qualité du lien radio se dégrade de façon excessive (en dehors de la fenêtre d'acceptabilité définie par l'opérateur), par exemple construction d'un mur, déplacement de l'antenne sur le site client, arbre, etc...) les paramètres de QoS peuvent être renégociés et revue à la baisse. Le client et l'opérateur peuvent être avertis, et prendre ainsi les décisions et actions appropriées.

Par exemple, des actions « long-termes » peuvent être mises en place entre l'opérateur et le client si la qualité du lien radio reste dégradée pendant une longue durée (par exemple pendant une période supérieure à 24 heures) :
- diminution du débit garanti précédemment négocié ;
- annulation du débit garanti et négociation d'une priorité relative ;
- annulation du débit garanti, la QoS négocié du flux devient BE ;
- annulation de la priorité relative, la QoS négociée du flux devient BE ;
- etc.

### 5.3 Variantes

On a décrit ci-dessus un exemple de réalisation selon lequel les valeurs de qualité de lien radio sont des valeurs de puissance reçue par l'équipement client (RSRP).

En variante, les valeurs de qualité de lien radio peuvent être un indicateur de qualité du canal CQI.

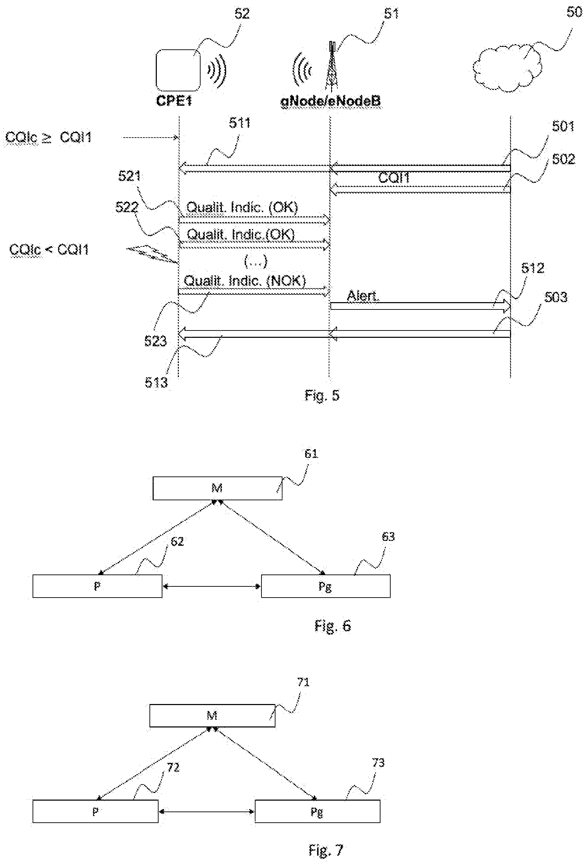

Ainsi, selon l'exemple illustré en figure 5, la station de base 51 peut recevoir, du cœur de réseau 50, la commande de création d'un « bearer » dédié pour une première configuration (501), par exemple une configuration GBR pour un type de flux, ainsi qu'une première valeur du lien radio entre la station de base 51 et le CPE1 52 (502), correspondant au CQI initial, notée CQI1. La station de base 51 peut allouer des ressources au CPE1 52 en utilisant le bearer dédié pour la configuration GBR (511).

Le CPE1 52 peut effectuer une ou plusieurs mesures de la qualité du lien radio en sens descendant, et remonter le CQI courant, noté CQlc, à la station de base 51 (521, 522, 523).

Tant que le CQI courant présente un niveau de qualité radio supérieur ou égal au CQI initial (521, 522) (CQIc ≥ CQI1), le bearer dédié pour la configuration BGR du CPE1 52 n'est pas modifié.

En revanche, si le CQI courant présente un niveau de qualité radio inférieur au CQI initial (521, 522), la station de base 51 peut remonter une alerte (512) au cœur de réseau 50. La station de base 51 peut recevoir la commande d'un bearer dédié pour une deuxième configuration (503), par exemple une configuration GBR avec un débit garanti inférieur à celui de la première configuration.

La station de base 51 peut allouer des ressources au CPE1 52 en utilisant le nouveau bearer (513).

Par ailleurs, on a décrit ci-dessus des exemples selon lequel l'équipement client est un équipement fixe, permettant par exemple un accès FWA. Dans d'autres modes de réalisation, l'équipement client peut être un terminal mobile.

Dans ce cas, le procédé décrit précédemment peut être mis en œuvre lorsque le terminal se stabilise dans la cellule (au sens radio et/ou géographique), notamment pour l'obtention de la première valeur si elle est déterminée à partir d'une mesure de la qualité du lien radio. Un terminal en mouvement pourrait donc voir sa connectivité (i.e. son débit) passer de GBR à non GBR puis GBR, etc..., suivant les caractéristiques des cellules traversées et sa position dans la cellule.

### 5.4 Structures simplifiées d'une station de base et d'un équipement client

On présente désormais, en relation avec la figure 6, la structure simplifiée d'une station de base selon au moins un mode de réalisation décrit ci-dessus.

Comme illustré en figure 6, une telle station de base comprend au moins une mémoire 61 comprenant une mémoire tampon, au moins une unité de traitement 62, équipée par exemple d'une machine de calcul programmable ou d'une machine de calcul dédiée, par exemple un processeur P, et pilotée par le programme d'ordinateur 63, mettant en œuvre des étapes du procédé de communication selon au moins un mode de réalisation de l'invention.

A l'initialisation, les instructions de code du programme d'ordinateur 63 sont par exemple chargées dans une mémoire RAM avant d'être exécutées par le processeur de l'unité de traitement 62.

Le processeur de l'unité de traitement 62 met en œuvre des étapes du procédé de communication décrit précédemment, selon les instructions du programme d'ordinateur 63, pour :
- obtenir au moins une première valeur de qualité d'un lien radio sens montant ou sens descendant entre la station de base et l'équipement client,
- allouer des ressources radios à l'équipement client, et éventuellement à au moins un autre équipement attaché à la station de base, selon un schéma d'allocation mettant en œuvre une première configuration de qualité de service radio dépendante de ladite au moins une première valeur sens montant ou sens descendant pour au moins un flux émis ou reçu par l'équipement client,
- allouer des ressources radios à l'équipement client, et éventuellement à au moins un autre équipement attaché à la station de base, selon un schéma d'allocation mettant en œuvre une deuxième configuration de qualité de service radio pour au moins un flux émis ou reçu par l'équipement client, activés si au moins une valeur courante de qualité du lien radio sens montant ou sens descendant entre la station de base et l'équipement client, obtenue à partir d'au moins une mesure effectuée par l'équipement client ou la station de base, est associée à un niveau de qualité de lien radio inférieur à ladite au moins une première valeur sens montant ou sens descendant respectivement.

On présente finalement, en relation avec la figure 7, la structure simplifiée d'un équipement client selon au moins un mode de réalisation décrit ci-dessus.

Comme illustré en figure 7, un tel équipement client, comprend au moins une mémoire 71 comprenant une mémoire tampon, au moins une unité de traitement 72, équipée par exemple d'une machine de calcul programmable ou d'une machine de calcul dédiée, par exemple un processeur P, et pilotée par le programme d'ordinateur 73, mettant en œuvre des étapes du procédé de gestion de communication selon au moins un mode de réalisation de l'invention.

A l'initialisation, les instructions de code du programme d'ordinateur 73 sont par exemple chargées dans une mémoire RAM avant d'être exécutées par le processeur de l'unité de traitement 72.

Le processeur de l'unité de traitement 72 met en œuvre des étapes du procédé de gestion de communication décrit précédemment, selon les instructions du programme d'ordinateur 73, pour :
- obtenir au moins une première valeur de qualité d'un lien radio sens descendant entre la station de base et l'équipement client,
- transmettre ladite au moins une première valeur sens descendant à la station de base, ladite au moins une première valeur étant destinée à être utilisée par la station de base pour l'allocation des ressources radios à l'équipement client, et éventuellement à au moins un autre équipement attaché à la station de base, selon un schéma d'allocation mettant en œuvre une première configuration de qualité de service radio dépendante de ladite au moins une première valeur sens descendant pour au moins un flux émis ou reçu par l'équipement client, activés si ladite au moins une première valeur est mesurée par l'équipement client,
- mesurer au moins une valeur courante de qualité du lien radio sens descendant entre la station de base et l'équipement client,
- transmettre ladite au moins une valeur courante sens descendant à la station de base, ou une notification informant la station de base que ladite au moins une valeur courante sens descendant est associée à un niveau de qualité de lien radio inférieur à ladite au moins une première valeur sens descendant, ladite au moins une valeur courante sens descendant ou la notification étant destinée à être utilisée par la station de base pour l'allocation des ressources radios à l'équipement client, et éventuellement à au moins un autre équipement attaché à la station de base, selon un schéma d'allocation mettant en œuvre une deuxième configuration de qualité de service radio pour au moins un flux émis ou reçu par l'équipement client.

## Revendications

1. Procédé de communication entre une station de base et au moins un équipement de communication attaché à ladite station de base,
ledit au moins un équipement de communication comprenant un équipement client,
**caractérisé en ce que** ledit procédé comprend :
- obtention (111) d'au moins une première valeur de qualité d'un lien radio sens montant ou sens descendant entre ladite station de base et ledit équipement client,
- allocation (112) des ressources radios audit au moins un équipement attaché à ladite station de base selon un schéma d'allocation mettant en œuvre une première configuration de qualité de service radio dépendante de ladite au moins une première valeur sens montant ou sens descendant pour au moins un flux émis ou reçu par ledit équipement client,
- si au moins une valeur courante de qualité du lien radio sens montant ou sens descendant entre ladite station de base et ledit équipement client, obtenue à partir d'au moins une mesure effectuée par ledit équipement client ou ladite station de base, est associée à un niveau de qualité de lien radio inférieur à ladite au moins une première valeur sens montant ou sens descendant respectivement, allocation (122) des ressources radios audit au moins un équipement attaché à ladite station de base selon un schéma d'allocation mettant en œuvre une deuxième configuration de qualité de service radio pour au moins un flux émis ou reçu par ledit équipement client, ladite deuxième configuration présentant un niveau de qualité de service radio inférieur à ladite première configuration.

2. Dispositif de type station de base configuré pour communiquer avec au moins un équipement de communication, ledit au moins un équipement de communication comprenant un équipement client, ladite station de base comprenant au moins un processeur configuré pour :
- une obtention d'au moins une première valeur de qualité d'un lien radio sens montant ou sens descendant entre ladite station de base et ledit équipement client,
- une allocation des ressources radios audit au moins un équipement attaché à ladite station de base selon un schéma d'allocation mettant en œuvre une première configuration de qualité de service radio dépendante de ladite au moins une première valeur sens montant ou sens descendant pour au moins un flux émis ou reçu par ledit équipement client,
- une allocation des ressources radios audit au moins un équipement attaché à ladite station de base selon un schéma d'allocation mettant en œuvre une deuxième configuration de qualité de service radio pour au moins un flux émis ou reçu par ledit équipement client, activés si au moins une valeur courante de qualité du lien radio sens montant ou sens descendant entre ladite station de base et ledit équipement client, obtenue à partir d'au moins une mesure effectuée par ledit équipement client ou ladite station de base, est associée à un niveau de qualité de lien radio inférieur à ladite au moins une première valeur sens montant ou sens descendant respectivement, ladite deuxième configuration présentant un niveau de qualité de service radio inférieur à ladite première configuration.

3. Procédé selon la revendication 1 ou dispositif selon la revendication 2, **caractérisé en ce que** lesdites première et deuxième configuration de qualité de service radio appartiennent au groupe comprenant :
- une configuration associée à une allocation de ressources radios classique de type « best effort » ;
- une configuration associée à une allocation de ressources radios avec priorisation relative ;
- une configuration associée à une allocation de ressources radios avec priorisation stricte à débit garanti.

4. Procédé selon l'une quelconque des revendications 1 et 3, ou dispositif selon l'une quelconque des revendications 2 et 3, **caractérisé en ce qu'**il met en œuvre, préalablement à l'allocation (122) des ressources radios selon un schéma d'allocation mettant en œuvre une deuxième configuration de qualité de service radio, la réception de ladite moins une valeur courante sens descendant, en provenance dudit équipement client.

5. Procédé selon l'une quelconque des revendications 1 ou 3 et 4, ou dispositif selon l'une quelconque des revendications 2 à 4, **caractérisé en ce qu'**il met en œuvre, préalablement à l'allocation (122) des ressources radios selon un schéma d'allocation mettant en œuvre une deuxième configuration de qualité de service radio, la réception d'une notification en provenance dudit équipement client, informant ladite station de base que ladite au moins une valeur courante sens descendant est associée à un niveau de qualité de lien radio inférieur à ladite au moins une première valeur sens descendant.

6. Procédé selon l'une quelconque des revendications 1 ou 3 à 5, ou dispositif selon l'une quelconque des revendications 2 à 5, **caractérisé en ce que** l'allocation (122) des ressources radios selon un schéma d'allocation mettant en œuvre une deuxième configuration de qualité de service radio est mise en œuvre lorsque plusieurs valeurs courantes successives sens montant ou sens descendant sont associées à un niveau de qualité de lien radio inférieur à ladite au moins une première valeur sens montant ou sens descendant respectivement.

7. Procédé selon l'une quelconque des revendications 1 ou 3 à 6, ou dispositif selon l'une quelconque des revendications 2 à 6, **caractérisé en ce qu'**il met en outre en œuvre :
- si au moins une nouvelle valeur courante de qualité du lien radio sens montant ou sens descendant entre ladite station de base et ledit équipement client, obtenue à partir d'au moins une nouvelle mesure effectuée par ledit équipement client ou ladite station de base, est associée à un niveau de qualité de lien radio supérieur ou égal à au moins une deuxième valeur de qualité d'un lien radio entre la station de base et l'équipement client, sens montant ou sens descendant respectivement, allocation des ressources radios audit au moins un équipement attaché à ladite station de base selon un schéma d'allocation mettant en œuvre ladite première configuration de qualité de service radio pour au moins un flux émis ou reçu par ledit équipement client.

8. Procédé ou dispositif selon la revendication 7, **caractérisé en ce que** ladite allocation des ressources radios selon un schéma d'allocation mettant en œuvre ladite première configuration de qualité de service radio pour au moins un flux émis ou reçu par ledit équipement client est mise en œuvre si ladite au moins une nouvelle valeur courante de qualité du lien radio sens montant est supérieure à ladite au moins une deuxième valeur sens montant et si ladite au moins une nouvelle valeur courante de qualité du lien radio sens descendant est supérieure à ladite au moins une deuxième valeur sens descendent.

9. Procédé selon l'une quelconque des revendications 1 ou 3 à 8, ou dispositif selon l'une quelconque des revendications 2 à 8, **caractérisé en ce que** ladite allocation (112) des ressources radios selon un schéma d'allocation mettant en œuvre une deuxième configuration de qualité de service radio pour au moins un flux émis ou reçu par ledit équipement client met en œuvre ladite première configuration de qualité de service radio pour au moins un flux émis ou reçu par un équipement dudit au moins un équipement attaché à ladite station de base, distinct dudit équipement client.

10. Procédé selon l'une quelconque des revendications 1 ou 3 à 9, ou dispositif selon l'une quelconque des revendications 2 à 9, **caractérisé en ce que** ladite au moins une première valeur de qualité d'un lien radio sens montant ou sens descendant entre ladite station de base et ledit équipement client est obtenue à partir :
- d'au moins une mesure effectuée par ledit équipement client ;
- d'au moins une mesure effectuée par ladite station de base ;
- d'une lecture dans une table.

11. Procédé de gestion de communication entre une station de base et un équipement client, **caractérisé en ce que** ledit procédé comprend, mis en œuvre par ledit équipement client :
- obtention d'au moins une première valeur de qualité d'un lien radio sens descendant entre ladite station de base et ledit équipement client, ladite première valeur sens descendant correspondant à une allocation des ressources radio à au moins un équipement de communication attaché à ladite station de base, ledit au moins un au moins un équipement de communication comprenant ledit équipement client, selon un schéma d'allocation mettant en œuvre une première configuration de qualité de service radio dépendante de ladite au moins une première valeur sens descendant pour au moins un flux émis ou reçu par ledit équipement client,
- mesure d'au moins une valeur courante de qualité du lien radio sens descendant entre ladite station de base et ledit équipement client,
- transmission de ladite au moins une valeur courante sens descendant à ladite station de base, ou d'une notification informant ladite station de base que ladite au moins une valeur courante sens descendant est associée à un niveau de qualité de lien radio inférieur à ladite au moins une première valeur sens descendant,
- une émission et/ou une réception d'au moins un flux par ledit équipement client, selon une deuxième configuration de qualité de service radio mise en œuvre selon un schéma d'allocation de ressource auxdits équipement de communication attachés à ladite station de base, ladite deuxième configuration de qualité de service radio présentant un niveau de qualité de service radio inférieur à ladite première configuration.

12. Equipement client, configuré pour communiquer avec une station de base, comprenant au moins un processeur configuré pour :
- une obtention d'au moins une première valeur de qualité d'un lien radio sens descendant entre ladite station de base et ledit équipement client, ladite première valeur sens descendant correspondant à une allocation des ressources radio à au moins un équipement de communication attaché à ladite station de base, ledit au moins un au moins un équipement de communication comprenant ledit équipement client, selon un schéma d'allocation mettant en œuvre une première configuration de qualité de service radio dépendante de ladite au moins une première valeur sens descendant pour au moins un flux émis ou reçu par ledit équipement client,
- une mesure d'au moins une valeur courante de qualité du lien radio sens descendant entre ladite station de base et ledit équipement client,
- une transmission de ladite au moins une valeur courante sens descendant à ladite station de base, ou d'une notification informant ladite station de base que ladite au moins une valeur courante sens descendant est associée à un niveau de qualité de lien radio inférieur à ladite au moins une première valeur sens descendant,
- une émission et/ou une réception d'au moins un flux par ledit équipement client, selon une deuxième configuration de qualité de service radio mise en œuvre selon un schéma d'allocation de ressource auxdits équipement de communication attachés à ladite station de base, ladite deuxième configuration de qualité de service radio présentant un niveau de qualité de service radio inférieur à ladite première configuration.

13. Procédé de gestion de communication selon la revendication 11, ou équipement client selon la revendication 12, comprenant :
- lorsque ladite au moins une première valeur est mesurée par l'équipement client, une transmission de ladite au moins une première valeur sens descendant à ladite station de base.

14. Programme d'ordinateur comportant des instructions pour la mise en œuvre, lorsque ledit programme est exécuté par au moins un processeur, d'un procédé de communication selon l'une au moins des revendications 1 ou 3 à 10 ou d'un procédé de gestion de communication selon l'une au moins des revendications 11 ou 13.

15. Support d'enregistrement lisible par un ordinateur, sur lequel sont enregistrés un ou plusieurs programmes d'ordinateur comprenant des instructions de code de programme pour l'exécution d'au moins une étape d'un procédé de communication selon l'une au moins des revendications 1 ou 3 à 10 ou d'un procédé de gestion de communication selon l'une au moins des revendications 11 ou 13.

## Patentansprüche

1. Verfahren zur Kommunikation zwischen einer Basisstation und mindestens einem Kommunikationsgerät, das an die Basisstation angeschlossen ist,
wobei das mindestens eine Kommunikationsgerät ein Client-Gerät umfasst,
**dadurch gekennzeichnet, dass** das Verfahren umfasst:
- Erhalt (111) mindestens eines ersten Werts der Qualität einer Uplink- oder Downlink-Funkverbindung zwischen der Basisstation und dem Client-Gerät,
- Zuweisung (112) von Funkressourcen an das mindestens eine an die Basisstation angeschlossene Gerät nach einem Zuweisungsschema, das eine erste Konfiguration der Funkdienstqualität implementiert, die von dem mindestens einen ersten Uplink- oder Downlink-Wert für mindestens einen von dem Client-Gerät gesendeten oder empfangenen Datenstrom abhängt,
- wenn mindestens ein aktueller Wert der Qualität der Uplink- oder Downlink-Funkverbindung zwischen der Basisstation und dem Client-Gerät, der aus mindestens einer von dem Client-Gerät oder der Basisstation durchgeführten Messung erhalten wurde, einem Niveau der Qualität der Funkverbindung zugeordnet ist, das unter dem mindestens einen ersten Uplink- oder Downlink-Wert liegt, Zuweisung (122) der Funkressourcen an das mindestens eine an die Basisstation angeschlossene Gerät nach einem Zuweisungsschema, das eine zweite Konfiguration der Funkdienstqualität für mindestens einen von dem Client-Gerät gesendeten oder empfangenen Datenstrom implementiert, wobei die zweite Konfiguration ein Niveau der Funkdienstqualität aufweist, das niedriger ist als das der ersten Konfiguration.

2. Vorrichtung vom Typ Basisstation, die zur Kommunikation mit mindestens einem Kommunikationsgerät konfiguriert ist, wobei das mindestens eine Kommunikationsgerät ein Client-Gerät umfasst, wobei die Basisstation mindestens einen Prozessor umfasst, der zu Folgendem konfiguriert ist:
- Erhalt mindestens eines ersten Werts der Qualität einer Uplink- oder Downlink-Funkverbindung zwischen der Basisstation und dem Client-Gerät,
- Zuweisung von Funkressourcen an das mindestens eine an die Basisstation angeschlossene Gerät nach einem Zuweisungsschema, das eine erste Konfiguration der Funkdienstqualität implementiert, die von dem mindestens einen ersten Uplink- oder Downlink-Wert für mindestens einen von dem Client-Gerät gesendeten oder empfangenen Datenstrom abhängt,
- Zuweisung von Funkressourcen an das mindestens eine an die Basisstation angeschlossene Gerät nach einem Zuweisungsschema, das eine zweite Konfiguration der Funkdienstqualität für mindestens einen von dem Client-Gerät gesendeten oder empfangenen Datenstrom implementiert, die aktiviert wird, wenn mindestens ein aktueller Wert der Qualität der Uplink- oder Downlink-Funkverbindung zwischen der Basisstation und dem Client-Gerät, der aus mindestens einer von dem Client-Gerät oder der Basisstation durchgeführten Messung erhalten wird, einem Niveau der Funkdienstqualität zugeordnet ist, das niedriger ist als der mindestens eine erste Uplink- oder Downlink-Wert, wobei die zweite Konfiguration ein Niveau der Funkdienstqualität aufweist, das niedriger ist als das der ersten Konfiguration.

3. Verfahren nach Anspruch 1 oder Vorrichtung nach Anspruch 2, **dadurch gekennzeichnet, dass** die erste und zweite Konfiguration der Funkdienstqualität zu der Gruppe gehören, die umfasst:
- eine Konfiguration, die einer klassischen Zuweisung von Funkressourcen vom Typ "Best Effort" zugeordnet ist;
- eine Konfiguration, die einer Zuweisung von Funkressourcen mit relativer Priorisierung zugeordnet ist;
- eine Konfiguration, die einer Zuweisung von Funkressourcen mit strikter Priorisierung und garantierter Datenrate zugeordnet ist.

4. Verfahren nach einem der Ansprüche 1 und 3 oder Vorrichtung nach einem der Ansprüche 2 und 3, **dadurch gekennzeichnet, dass** es vor der Zuweisung (122) der Funkressourcen nach einem Zuweisungsschema, das eine zweite Konfiguration der Funkdienstqualität implementiert, den Empfang des mindestens einen aktuellen Downlink-Werts aus dem Client-Gerät implementiert.

5. Verfahren nach einem der Ansprüche 1 oder 3 und 4 oder Vorrichtung nach einem der Ansprüche 2 bis 4, **dadurch gekennzeichnet, dass** es vor der Zuweisung (122) von Funkressourcen nach einem Zuweisungsschema, das eine zweite Konfiguration der Funkdienstqualität implementiert, den Empfang einer Benachrichtigung aus dem Client-Gerät implementiert, die die Basisstation darüber informiert, dass der mindestens eine aktuelle Downlink-Wert einem Niveau der Qualität der Funkverbindung zugeordnet ist, das niedriger ist als der mindestens eine erste Downlink-Wert.

6. Verfahren nach einem der Ansprüche 1 oder 3 bis 5 oder Vorrichtung nach einem der Ansprüche 2 bis 5, **dadurch gekennzeichnet, dass** die Zuweisung (122) der Funkressourcen nach einem Zuweisungsschema, das eine zweite Konfiguration der Funkdienstqualität implementiert, implementiert wird, wenn mehrere aufeinanderfolgende aktuelle Uplink- oder Downlink-Werte einem Niveau der Qualität der Funkverbindung zugeordnet sind, das niedriger ist als der mindestens eine erste Uplink- oder Downlink-Wert.

7. Verfahren nach einem der Ansprüche 1 oder 3 bis 6 oder Vorrichtung nach einem der Ansprüche 2 bis 6, **dadurch gekennzeichnet, dass** es außerdem implementiert:
- wenn mindestens ein neuer aktueller Wert der Qualität der Uplink- oder Downlink-Funkverbindung zwischen der Basisstation und dem Client-Gerät, der aus mindestens einer neuen Messung durch das Client-Gerät oder die Basisstation erhalten wurde, einem Niveau der Qualität der Funkverbindung zugeordnet ist, das höher oder gleich mindestens einem zweiten Wert der Qualität einer Funkverbindung zwischen der Basisstation und dem Client-Gerät ist, jeweils als Uplink oder Downlink, Zuweisung der Funkressourcen an das mindestens eine an die Basisstation angeschlossene Gerät nach einem Zuweisungsschema, das die erste Konfiguration der Funkdienstqualität für mindestens einen von dem Client-Gerät gesendeten oder empfangenen Datenstrom implementiert.

8. Verfahren oder Vorrichtung nach Anspruch 7, **dadurch gekennzeichnet, dass** die Zuweisung der Funkressourcen nach einem Zuweisungsschema, das die erste Konfiguration der Funkdienstqualität für mindestens einen von dem Client-Gerät gesendeten oder empfangenen Datenstrom implementiert, implementiert wird, wenn der mindestens eine neue aktuelle Wert der Qualität der Uplink-Funkverbindung größer ist als der mindestens eine zweite Uplink-Wert und wenn der mindestens eine neue aktuelle Wert der Qualität der Downlink-Funkverbindung größer ist als der mindestens eine zweite Downlink-Wert.

9. Verfahren nach einem der Ansprüche 1 oder 3 bis 8 oder Vorrichtung nach einem der Ansprüche 2 bis 8, **dadurch gekennzeichnet, dass** die Zuweisung (112) der Funkressourcen nach einem Zuweisungsschema, das eine zweite Konfiguration der Funkdienstqualität für mindestens einen von dem Client-Gerät gesendeten oder empfangenen Datenstrom implementiert, die erste Konfiguration der Funkdienstqualität für mindestens einen Datenstrom implementiert, der von einem Gerät des mindestens einen an die Basisstation angeschlossenen Gerätes gesendet oder empfangen wird, das sich von dem Client-Gerät unterscheidet.

10. Verfahren nach einem der Ansprüche 1 oder 3 bis 9 oder Vorrichtung nach einem der Ansprüche 2 bis 9, **dadurch gekennzeichnet, dass** der mindestens eine erste Wert der Qualität einer Uplink- oder Downlink-Funkverbindung zwischen der Basisstation und dem Client-Gerät erhalten wird aus:
- mindestens einer von dem Client-Gerät durchgeführten Messung;
- mindestens einer Messung, die von der Basisstation durchgeführt wird;
- einem Auslesen aus einer Tabelle.

11. Verfahren zur Verwaltung der Kommunikation zwischen einer Basisstation und einem Client-Gerät,
**dadurch gekennzeichnet, dass** das Verfahren, das von dem Client-Gerät implementiert wird, umfasst:
- Erhalten mindestens eines ersten Werts der Qualität einer Downlink-Funkverbindung zwischen der Basisstation und dem Client-Gerät, wobei der erste Downlink-Wert einer Zuweisung von Funkressourcen an mindestens ein an die Basisstation angeschlossenes Kommunikationsgerät entspricht, wobei das mindestens eine Kommunikationsgerät das Client-Gerät umfasst, nach einem Zuweisungsschema, das eine erste Konfiguration der Funkdienstqualität implementiert, die von dem mindestens einen ersten Downlink-Wert für mindestens einen von dem Client-Gerät gesendeten oder empfangenen Datenstrom abhängt,
- Messung mindestens eines aktuellen Werts der Qualität der Downlink-Funkverbindung zwischen der Basisstation und dem Client-Gerät,
- Übertragung des mindestens einen aktuellen Downlink-Werts an die Basisstation oder einer Benachrichtigung, die der Basisstation mitteilt, dass der mindestens eine aktuelle Downlink-Wert einem Niveau der Qualität der Funkverbindung zugeordnet ist, das niedriger ist als der mindestens eine erste Downlink-Wert,
- Senden und/oder Empfangen mindestens eines Datenstroms durch das Client-Gerät nach einer zweiten Konfiguration der Funkdienstqualität, die nach einem Zuweisungsschema von Ressourcen an die mit der Basisstation verbundenen Kommunikationsgeräte implementiert ist, wobei die zweite Konfiguration der Funkdienstqualität ein Niveau der Funkdienstqualität aufweist, das niedriger ist als das der ersten Konfiguration.

12. Client-Gerät, das für die Kommunikation mit einer Basisstation konfiguriert ist und mindestens einen Prozessor umfasst, der für Folgendes konfiguriert ist:
- Erhalten mindestens eines ersten Werts der Qualität einer Downlink-Funkverbindung zwischen der Basisstation und dem Client-Gerät, wobei der erste Downlink-Wert einer Zuweisung von Funkressourcen an mindestens ein an die Basisstation angeschlossenes Kommunikationsgerät entspricht, wobei das mindestens eine Kommunikationsgerät das Client-Gerät umfasst, nach einem Zuweisungsschema, das eine erste Konfiguration der Funkdienstqualität implementiert, die von dem mindestens einen ersten Downlink-Wert für mindestens einen von dem Client-Gerät gesendeten oder empfangenen Datenstrom abhängt,
- Messung mindestens eines aktuellen Werts der Qualität der Downlink-Funkverbindung zwischen der Basisstation und dem Client-Gerät,
- Übertragung des mindestens einen aktuellen Downlink-Werts an die Basisstation oder einer Benachrichtigung, die der Basisstation mitteilt, dass der mindestens eine aktuelle Downlink-Wert einem Niveau der Qualität der Funkverbindung zugeordnet ist, der niedriger ist als der mindestens eine erste Downlink-Wert,
- Senden und/oder Empfangen mindestens eines Datenstroms durch das Client-Gerät nach einer zweiten Konfiguration der Funkdienstqualität, die nach einem Zuweisungsschema von Ressourcen an die mit der Basisstation verbundenen Kommunikationsgeräte implementiert ist, wobei die zweite Konfiguration der Funkdienstqualität ein Niveau der Funkdienstqualität aufweist, das niedriger ist als das der ersten Konfiguration.

13. Verfahren zur Verwaltung der Kommunikation nach Anspruch 11 oder Client-Gerät nach Anspruch 12, umfassend:
- wenn der mindestens eine erste Wert von dem Client-Gerät gemessen wird, eine Downlink-Übertragung des mindestens einen ersten Werts an die Basisstation.

14. Computerprogramm, enthaltend Anweisungen zur Implementierung eines Kommunikationsverfahrens nach mindestens einem der Ansprüche 1 oder 3 bis 10 oder eines Kommunikationsverwaltungsverfahrens nach mindestens einem der Ansprüche 11 oder 13, wenn das Programm von mindestens einem Prozessor ausgeführt wird.

15. Computerlesbarer Speicher, auf dem ein oder mehrere Computerprogramme gespeichert sind, die Programmcodeanweisungen zur Ausführung mindestens eines Schritts eines Kommunikationsverfahrens nach mindestens einem der Ansprüche 1 oder 3 bis 10 oder eines Kommunikationsverwaltungsverfahrens nach mindestens einem der Ansprüche 11 oder 13 umfassen.

## Claims

1. Method for communication between a base station and at least one communication equipment attached to said base station,
said at least one communication equipment comprising a client equipment,
**characterized in that** said method comprises:
- obtaining (111) at least a first quality value of an uplink or downlink radio link between said base station and said client equipment,
- allocating (112) the radio resources to said at least one equipment attached to said base station according to an allocation scheme implementing a first radio service quality configuration dependent on said at least one first uplink or downlink value for at least one stream sent or received by said client equipment,
- if at least one current quality value of the uplink or downlink radio link between said base station and said client equipment, obtained from at least one measurement carried out by said client equipment or said base station, is associated with a radio link quality level lower than said at least one first uplink or downlink value, respectively, allocating (122) the radio resources to said at least one equipment attached to said base station according to an allocation scheme implementing a second radio service quality configuration for at least one stream sent or received by said client equipment, said second configuration having a radio service quality level lower than said first configuration.

2. Base-station device configured to communicate with at least one communication equipment, said at least one communication equipment comprising a client equipment, said base station comprising at least one processor configured to:
- obtain at least a first quality value of an uplink or downlink radio link between said base station and said client equipment,
- allocate the radio resources to said at least one equipment attached to said base station according to an allocation scheme implementing a first radio service quality configuration dependent on said at least one first uplink or downlink value for at least one stream sent or received by said client equipment,
- allocate the radio resources to said at least one equipment attached to said base station according to an allocation scheme implementing a second radio service quality configuration for at least one stream sent or received by said client equipment, which are activated if at least one current quality value of the uplink or downlink radio link between said base station and said client equipment, obtained from at least one measurement carried out by said client equipment or said base station, is associated with a radio link quality level lower than said at least one first uplink or downlink value, respectively, said second configuration having a radio service quality level lower than said first configuration.

3. Method according to Claim 1 or device according to Claim 2, **characterized in that** said first and second radio service quality configurations belong to the group comprising:
- a configuration associated with a conventional "best effort" allocation of radio resources;
- a configuration associated with an allocation of radio resources with relative prioritization;
- a configuration associated with an allocation of radio resources with strict prioritization at a guaranteed rate.

4. Method according to either one of Claims 1 and 3, or device according to either one of Claims 2 and 3, **characterized in that** it implements, prior to the allocation (122) of the radio resources according to an allocation scheme implementing a second radio service quality configuration, receiving said at least one current downlink value from said client equipment.

5. Method according to any one of Claims 1 or 3 and 4, or device according to any one of Claims 2 to 4, **characterized in that** it implements, prior to the allocation (122) of the radio resources according to an allocation scheme implementing a second radio service quality configuration, receiving a notification from said client equipment, informing said base station that said at least one current downlink value is associated with a radio link quality level lower than said at least one first downlink value.

6. Method according to any one of Claims 1 or 3 to 5, or device according to any one of Claims 2 to 5, **characterized in that** the allocation (122) of the radio resources according to an allocation scheme implementing a second radio service quality configuration is implemented when a plurality of successive current uplink or downlink values are associated with a radio link quality level lower than said at least one first uplink or downlink value, respectively.

7. Method according to any one of Claims 1 or 3 to 6, or device according to any one of Claims 2 to 6, **characterized in that** it further implements:
- if at least one new current quality value of the uplink or downlink radio link between said base station and said client equipment, obtained from at least one new measurement carried out by said client equipment or said base station, is associated with a radio link quality level greater than or equal to at least a second quality value of a radio link between the base station and the client equipment, uplink or downlink, respectively, allocating the radio resources to said at least one equipment attached to said base station according to an allocation scheme implementing said first radio service quality configuration for at least one stream sent or received by said client equipment.

8. Method or device according to Claim 7, **characterized in that** said allocation of the radio resources according to an allocation scheme implementing said first radio service quality configuration for at least one stream sent or received by said client equipment is implemented if said at least one new current quality value of the uplink radio link is greater than said at least one second uplink value and if said at least one new current quality value of the downlink radio link is greater than said at least one second downlink value.

9. Method according to any one of Claims 1 or 3 to 8, or device according to any one of Claims 2 to 8, **characterized in that** said allocation (112) of the radio resources according to an allocation scheme implementing a second radio service quality configuration for at least one stream sent or received by said client equipment implements said first radio service quality configuration for at least one stream sent or received by an equipment of said at least one equipment attached to said base station, distinct from said client equipment.

10. Method according to any one of Claims 1 or 3 to 9, or device according to any one of Claims 2 to 9, **characterized in that** said at least one first quality value of an uplink or downlink radio link between said base station and said client equipment is obtained from:
- at least one measurement carried out by said client equipment;
- at least one measurement carried out by said base station;
- a reading in a table.

11. Method for managing communication between a base station and a client equipment,
**characterized in that** said method comprises, implemented by said client equipment:
- obtaining at least a first quality value of a downlink radio link between said base station and said client equipment, said first downlink value corresponding to an allocation of the radio resources to at least one communication equipment attached to said base station, said at least one communication equipment comprising said client equipment, according to an allocation scheme implementing a first radio service quality configuration dependent on said at least one first downlink value for at least one stream sent or received by said client equipment,
- measuring at least one current quality value of the downlink radio link between said base station and said client equipment,
- transmitting said at least one current downlink value to said base station, or a notification informing said base station that said at least one current downlink value is associated with a radio link quality level lower than said at least one first downlink value,
- sending and/or receiving at least one stream by said client equipment, according to a second radio service quality configuration implemented according to an allocation scheme for allocating resources to said communication equipment attached to said base station, said second radio service quality configuration having a radio service quality level lower than said first configuration.

12. Client equipment, configured to communicate with a base station, comprising at least one processor configured to:
- obtain at least a first quality value of a downlink radio link between said base station and said client equipment, said first downlink value corresponding to an allocation of the radio resources to at least one communication equipment attached to said base station, said at least one communication equipment comprising said client equipment, according to an allocation scheme implementing a first radio service quality configuration dependent on said at least one first downlink value for at least one stream sent or received by said client equipment,
- measure at least one current quality value of the downlink radio link between said base station and said client equipment,
- transmit said at least one current downlink value to said base station, or a notification informing said base station that said at least one current downlink value is associated with a radio link quality level lower than said at least one first downlink value,
- send and/or receive at least one stream by said client equipment, according to a second radio service quality configuration implemented according to an allocation scheme for allocating resources to said communication equipment attached to said base station, said second radio service quality configuration having a radio service quality level lower than said first configuration.

13. Method for managing communication according to Claim 11, or client equipment according to Claim 12, comprising:
- when said at least one first value is measured by the client equipment, transmitting said at least one first downlink value to said base station.

14. Computer program comprising instructions for implementing, when said program is executed by at least one processor, a communication method according to at least one of Claims 1 or 3 to 10 or a method for managing communication according to at least one of Claims 11 and 13.

15. Computer-readable storage medium on which are stored one or more computer programs comprising program code instructions for executing at least one step of a communication method according to at least one of Claims 1 or 3 to 10 or of a method for managing communication according to at least one of Claims 11 and 13.
